(19) Europäisches Patentamt
European Patent Office
Office européen des brevets

(11) **EP 2 306 050 A1**

(12) **EUROPEAN PATENT APPLICATION**
published in accordance with Art. 153(4) EPC

(43) Date of publication:
**06.04.2011 Bulletin 2011/14**

(51) Int Cl.:
***F16J 12/00*** *(2006.01)*

(21) Application number: **09723929.7**

(22) Date of filing: **18.03.2009**

(86) International application number:
**PCT/JP2009/055354**

(87) International publication number:
**WO 2009/119421 (01.10.2009 Gazette 2009/40)**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **28.03.2008 JP 2008088756**

(71) Applicants:
• **Japan Agency for Marine-Earth Science and Technology**
**Yokosuka-shi**
**Kanagawa**
**237-0061 (JP)**
• **Kyocera Corporation**
**Kyoto-shi**
**Kyoto 612-8501 (JP)**

(72) Inventors:
• **YANO, Yusuke**
**Yokosuka-shi**
**Kanagawa 237-0061 (JP)**
• **ASAKAWA, Kenichi**
**Yokosuka-shi**
**Kanagawa 237-0061 (JP)**
• **YOSHIDA, Masao**
**Kirishima-shi**
**Kagoshima 899-4396 (JP)**

(74) Representative: **Beetz & Partner**
**Patentanwälte**
**Steinsdorfstrasse 10**
**80538 München (DE)**

(54) **PRESSURE CONTAINER, AND BUOYANT BODY AND EXPLORING DEVICE WHICH ARE PROVIDED WITH THE SAME**

(57)    The invention relates to a pressure container having improved improved reliability of pressure-resistant performance and sealing performance at a connecting portion between outer shells, and a buoyant body and an exploratory apparatus provided therewith. a pressure container includes a semispherical first outer shell (2) made of ceramics, a semispherical second outer shell (3) made of ceramics, a straight cylindrical third outer shell (4) made of ceramics, and annular first and second connecting bodies (5, 6) interposed between the first outer shell (2) and the third outer shell (4) and between the second outer shell (3) and the third outer shell (4), and made of materials at least one of which has an elastic modulus smaller than those of the first to the third outer shells (2 to 4).

FIG. 1

**EP 2 306 050 A1**

Printed by Jouve, 75001 PARIS (FR)

# Description

## Technical Field

The present invention relates to a pressure container that accommodates measuring devices such as a magnetometer for sea floor exploration and that can exhibit a high pressure-resistant performance at a high pressure in a deep sea, and a buoyant body and an exploratory apparatus provided therewith.

## Background Art

Pressure containers used in deep-sea research activities are strongly required to be stronger and lighter, and pressure-resistant structures for deep sea applications are made of a titanium alloy or the like. This sort of conventional technology is disclosed in Japanese Unexamined Patent Publication JP-A 64-26065 (1989).

This conventional technology discloses a pressure container made of a titanium alloy including one panel portion corresponding to a semispherical first outer shell, another panel portion corresponding to a semispherical second outer shell, and a body portion corresponding to a straight cylindrical third outer shell.

In this pressure container, a flange is formed at each end portion of the body portion, a flange is formed at an open edge portion of each of the panel portions, and the flanges are connected with bolts and nuts for assembly. Each flange of the body portion and each flange of the panel portions are formed by cutting a forged material made of a titanium alloy.

Furthermore, another conventional technology is described in Non-Patent Document "Development Trend of Foreign Deep-sea Technologies, Journal of Japan Deep Sea Technology Association, 2007, No. 3". In this conventional technology, use of ceramics instead of a titanium alloy has been proposed, because, in the case where a pressure container is made of a titanium alloy as in the conventional technology of JP-A 64-26065 (1989), the specific gravity of the pressure container increases as the resisting pressure depth increases, and the production cost also increases.

## Disclosure of Invention

## Technical Problem

In the conventional technology described in JP-A 64-26065(1989), stress generated by the water pressure at the semispherical outer shells is different from that generated at the straight cylindrical outer shell, and the stress distribution becomes discontinuous at the portion connecting these members. Thus, compared with circumferential edge portions of the semispherical outer shells, a large strain occurs at both end portions of the straight cylindrical outer shell opposing the circumferential edge portions of the semispherical outer shells, which causes the problem that the reliability of pressure-resistant performance and sealing performance is low at the use environment in a deep sea at a water depth of 1000 m or more.

This sort of problem occurs regardless of the shape of a pressure container. For example, also in the case where a pressure container is substantially in the shape of a sphere obtained by connecting semispherical outer shells, when the shapes of the outer shells are slightly different from each other, or when the outer shells are made of the same material but properties thereof are slightly different from each other, stress generated at each of the circumferential edge portions opposing each other varies at some portions in the circumferential direction, and the stress distribution becomes discontinuous. Thus, the situation cannot be avoided in which the reliability of pressure-resistant performance and sealing performance is lowered at the portion connecting these members. The pressure-resistant performance and the sealing performance are desired to be improved.

Furthermore, in the conventional technology described in Non-Patent Document, use of ceramics instead of a titanium alloy has been proposed, because, in the case where a pressure container is made of a titanium alloy, the specific gravity of the pressure container increases as the resisting pressure depth increases, and the production cost also increases. Furthermore, ceramics has a compressive strength larger than that of a metal material such as a titanium alloy, and, thus, in the case where ceramics is used as a material of a pressure container, a light and strong pressure container can be produced. However, although the tensile strength of a metal material is substantially equal to the compressive strength thereof, the flexural strength of ceramics is lower than the compressive strength thereof, and, thus, when an approach for designing a metal pressure container typified by JP-A 64-26065 is applied to ceramics without any modification, large bending stress is generated at a portion connecting the semispherical outer shells and the straight cylindrical outer shells. Accordingly, in spite of having a high compressive strength, the thickness of the ceramic container has to be increased in order to suppress the bending stress to a tolerance value or lower, and, thus, it is problematic to use the container at a high water pressure in view of pressure-resistant performance and weight.

It is an object of the invention to solve the above-described problems and to provide a pressure container having improved reliability of pressure-resistant performance and sealing performance at a connecting portion between outer shells, and a pressure container having light and strong outer shells, and a buoyant body and an exploratory apparatus provided therewith.

## Solution to Problem

A pressure container of the invention comprises a semispherical first outer shell made of ceramics, a semispherical second outer shell made of ceramics, and an annular connecting body interposed between the first outer shell and the second outer shell and made of a material having an elastic modulus smaller than those of the first and second outer shells.

According to the invention, a first and a second outer shell are made of ceramics, an annular connecting body made of a material having an elastic modulus smaller than those of the first and the second outer shells is interposed between the first outer shell and the second outer shell, and whereby a substantially spherical pressure container is configured.

The connecting body interposed between the first and the second outer shells is made of a material having an elastic modulus smaller than those of the first and the second outer shells made of ceramics, and, thus, at a connecting portion where the circumferential edge portion of the first outer shell and the circumferential edge portion of the second outer shell oppose each other via the connecting body, even when stress generated at the circumferential edge portion of the first outer shell is different from stress generated at the circumferential edge portion of the second outer shell, use of a connecting body having an elastic modulus smaller than those of the first and the second outer shells disperses and reduces stress generated at each of the circumferential edge portions of the first and the second outer shells. Accordingly, discontinuity can be alleviated or eliminated, and, thus, the pressure-resistant performance and the sealing performance are improved.

Furthermore, a pressure container of the invention comprises a semispherical first outer shell made of ceramics, a semispherical second outer shell made of ceramics, a straight cylindrical third outer shell made of ceramics, and annular connecting bodies interposed between the first outer shell and the third outer shell and between the second outer shell and the third outer shell, and made of materials at least one of which has an elastic modulus smaller than those of the first to the third outer shells.

According to the invention, a first and a second outer shell and a third outer shell are made of ceramics, and annular connecting bodies made of materials having an elastic modulus smaller than those of the first and the second outer shells are respectively interposed between the first outer shell and the third outer shell and between the second outer shell and the third outer shell.

The connecting bodies respectively interposed between the first and the third outer shells and between the second and the third outer shells are made of materials having an elastic modulus smaller than those of the first to the third outer shells made of ceramics, and, thus, at a connecting portion where the circumferential edge portion of the first outer shell and one of the circumferential edge portions of the third outer shell adjacent to the first outer shell oppose each other via the connecting body, even when stress generated at the circumferential edge portion of the first outer shell is different from stress generated at the one circumferential edge portion of the third outer shell, use of a connecting body having an elastic modulus smaller than those of the first to the third outer shells disperses stress generated at each of the circumferential edge portions of the first and the third outer shell, and discontinuity of the stress is alleviated or eliminated.

Furthermore, at a connecting portion where the circumferential edge portion of the second outer shell and the other circumferential edge portion of the third outer shell adjacent to the second outer shell oppose each other via the connecting body, even when stress generated at the circumferential edge portion of the second outer shell is different from stress generated at the other circumferential edge portion of the third outer shell, use of a connecting body having an elastic modulus smaller than those of the first to the third outer shells disperses stress generated at each of the circumferential edge portions of the second and the third outer shells, and, thus, discontinuity is alleviated or eliminated.

In this manner, the pressure-resistant performance and the sealing performance at a portion connecting the first outer shell and the third outer shell and a portion connecting the second outer shell and the third outer shell are improved.

Advantageous Effects of Invention

According to the invention, an annular connecting body made of a material having an elastic modulus smaller than those of the first and the second outer shells is interposed between the first outer shell and the second outer shell, and, thus, discontinuity of the stress generated at each of the circumferential edge portions of first and the second outer shells can be alleviated or eliminated, the pressure-resistant performance and the sealing performance can be improved, and the thickness and the weight of the members can be reduced.

According to the invention, annular connecting bodies made of materials having an elastic modulus smaller than those of the first to the third outer shells are respectively interposed between the first outer shell and the third outer shell and between the second outer shell and the third outer shell, and, thus, stress generated at each of the circumferential edge portions of the first and the third outer shells is dispersed, and stress generated at each of the circumferential edge portions of the second and the third outer shells is dispersed. Thus, discontinuity of the stress can be alleviated or eliminated, the pressure-resistant performance and the sealing performance can be improved, and the thickness and the weight of the members can be reduced.

Brief Description of Drawings

Other and further objects, features, and advantages of the invention will be more explicit from the following detailed description taken with reference to the drawings wherein:

Fig. 1 is a cross-sectional view showing a pressure container of an embodiment of the invention;
Fig. 2 is a cross-sectional view of a first connecting body taken along line II-II in Fig. 1;
Fig. 3 is an enlarged cross-sectional view of section III in Fig. 1;
Fig. 4A is an enlarged cross-sectional view showing a state in which external pressure does not act on the sealing member;
Fig. 4B is an enlarged cross-sectional view showing a state in which low external pressure acts on the sealing member;
Fig. 4C is an enlarged cross-sectional view showing a state in which high external pressure acts on the sealing member;
Fig. 5 is a cross-sectional view showing a testing pressure container used in a pressure test for confirming the pressure-resistant performance of the pressure container according to the invention;
Fig. 6 is a graph showing a pressing load schedule of the testing pressure container;
Fig. 7 is a cross-sectional view showing a pressure container of another embodiment of the invention;
Fig. 8 is a view showing an unmanned exploratory apparatus provided with the pressure container of the embodiment shown in Fig. 1 or 7;
Fig. 9 is a view showing a towed deep-sea exploratory apparatus provided with a pressure container of another embodiment; and
Fig. 10 is a cross-sectional view showing a pressure container of further another embodiment of the invention.

Reference signs list

1    Pressure container
1a   Pressure container
1b   Pressure container
1A   Pressure container
1B   Pressure container
2    First outer shell
3    Second outer shell
4    Third outer shell
5    First connecting body
6    Second connecting body
7    Semisphere-side ring-shaped member
8    Cylinder-side ring-shaped member
9    Sealing member
10   Semisphere-side ring-shaped member
11   Cylinder-side ring-shaped member
12   Sealing member
13   Connector
20   Embedded portion
21   Projecting portion

22   Large-diameter portion
23   Small-diameter portion
24   Flange portion
25   Connecting portion
26   Seating face
30   Ring main body
31   Flange
33   Seal fitting groove
34   Fitting projection
35   Fitting recess
40   Back-up ring
41   Sealing member
C    Common axis

Best Mode for Carrying out the Invention

Now referring to the drawings, preferred embodiments of the invention are described below.

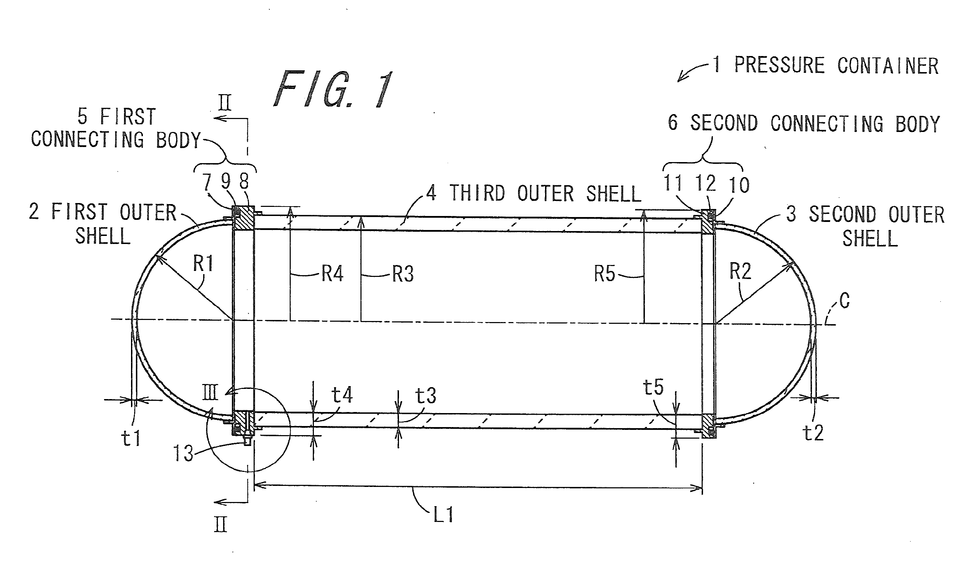

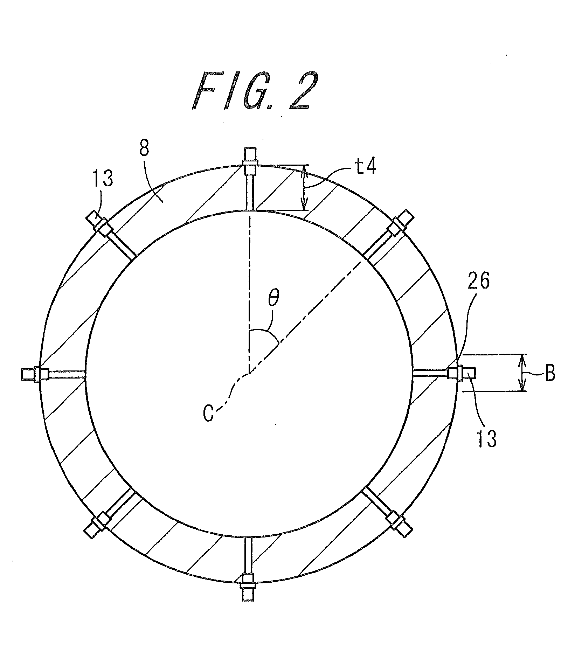

Fig. 1 is a cross-sectional view showing a pressure container 1 of an embodiment of the invention. Fig. 2 is a cross-sectional view of a first connecting body 5 taken along line II-II in Fig. 1. The pressure container 1 of this embodiment is configured by a semispherical first outer shell 2 made of ceramics, a semispherical second outer shell 3 made of ceramics, a straight cylindrical third outer shell 4 made of ceramics, an annular first connecting body 5 interposed between the first outer shell 2 and the third outer shell 4, and an annular second connecting body 6 interposed between the second outer shell 3 and the third outer shell 4. The first connecting body 5 and the second connecting body 6 are made of a material having an elastic modulus smaller than those of the first to the third outer shells 2 to 4.

The first connecting body 5 has an annular semisphere-side ring-shaped member 7 disposed on the side of the first outer shell 2, an annular cylinder-side ring-shaped member 8 disposed on the side of the third outer shell 4, and a sealing member 9 interposed between the semisphere-side ring-shaped member 7 and the cylinder-side ring-shaped member 8. Furthermore, the second connecting body 6 has an annular semisphere-side ring-shaped member 10 disposed on the side of the second outer shell 3, a cylinder-side ring-shaped member 11 disposed on the side of the third outer shell 4, and a sealing member 12 interposed between the semisphere-side ring-shaped member 10 and the cylinder-side ring-shaped member 11.

In this pressure container 1, in a state where the first and the second outer shells 2 and 3 are respectively connected via the first and the second connecting bodies 5 and 6 to both end portions in the axial direction of the third outer shell 4, the each axis of the first outer shell 2, the second outer shell 3, the third outer shell 4, the first connecting body 5, and the second connecting body 6 is on a common axis C that is a common straight line.

For example, the size and the shape of main portions of the first to the third outer shells 2 to 4 and the connecting bodies 5 and 6 will be described for reference. The first outer shell 2 and the second outer shell 3 are semispheres having radiuses R1 and R2 of the external surfaces of 137.9 mm and thicknesses t1 and t2 of 6.7 mm. The third outer shell 4 is a straight cylinder having a length L1 in the axial direction of 600 mm, a radius R3 of the outer circumferential face of 144 mm, and a thickness t3 of 19 mm. Furthermore, the first and the second connecting bodies 5 and 6 have radiuses R4 and R5 of the outer circumferential faces of 158 mm and thicknesses t4 and t5 of 34 mm.

Here, it is preferable that the first outer shell 2 and the second outer shell 3 have radiuses R1 and R2 of 50 to 500 mm and thicknesses t1 and t2 of 2 to 20 mm, the third outer shell 4 has a length L1 in the axial direction of 200 to 1500 mm, a radius R3 of the outer circumferential face of 50 to 500 mm, and a thickness t3 of 5 to 40 mm, and the first and the second connecting bodies 5 and 6 have radiuses R4 and R5 of the outer circumferential faces of 50 to 520 mm and thicknesses t4 and t5 of 10 to 100 mm.

In this embodiment, a plurality of connectors 13 are arranged with intervals in the circumferential direction on the cylinder-side ring-shaped member 8 of the first connecting body 5 so as to be connected with cables for electrically connecting various measuring devices accommodated in the pressure container 1 and other measuring apparatuses. The connectors 13 are radially arranged on radial lines at each angle θ in the circumferential direction on a virtual plane perpendicular to the common axis C. In this embodiment, the angle θ is set to 45°, but it is not limited thereto. For example, in the case where 12 connectors 13 are arranged in the circumferential direction, the angle θ is set to 30°.

This sort of arrangement of the connectors 13 is preferably determined in consideration of the shape of constituent components such that, since external pressure evenly acts in the circumferential direction of the cylinder-side ring-shaped member 8, the connectors 13 are arranged at even intervals, and the stress distribution of stress generated at the cylinder-side ring-shaped member 8 is axisymmetric.

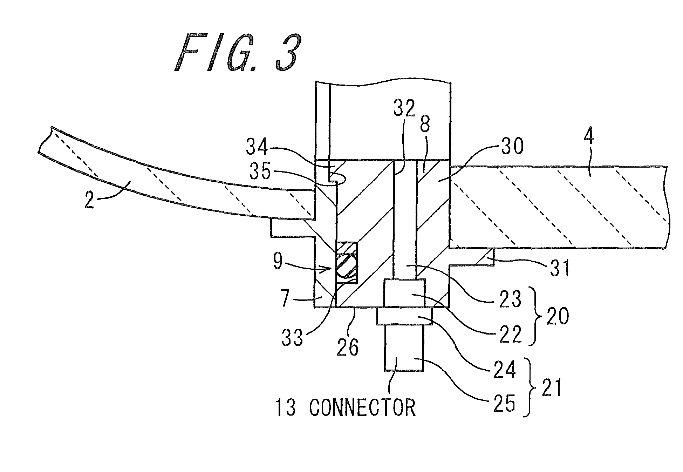

Fig. 3 is an enlarged cross-sectional view of section III in Fig. 1. Each of the connectors 13 has an embedded portion 20 embedded in the cylinder-side ring-shaped member 8 and a projecting portion 21 externally projecting from the cylinder-side ring-shaped member 8. The embedded portion 20 has a short large-diameter portion 22 and a long small-diameter portion 23. Furthermore, the projecting portion 21 has a flange portion 24 and a connecting portion 25 projecting from the flange portion 24. Such connectors 13 may be made of an ordinarily used metal such as stainless steel or a titanium alloy.

A flat seating face 26 perpendicular to a radius about the common axis C is formed on the outer circumferential portion of the cylinder-side ring-shaped member 8 in order to uniformly obtain close contact with the entire end face of the flange portion 24 of the connector 13 facing the cylinder-side ring-shaped member 8. This seating face 26 is formed at each position where the connector 13 is attached, and the region between the seating faces 26 on the outer circumferential face of the cylinder-side ring-shaped member 8 is in the shape of a straight cylinder. A width B of each seating face 26 perpendicular to the radius on the cross-section shown in Fig. 2 is, for example, 28 mm.

The cylinder-side ring-shaped member 8 has a ring main body 30 whose cross-section obtained by cutting the cylinder-side ring-shaped member 8 along a plane including the common axis C is substantially rectangular and a straight cylindrical flange 31 projecting from the end face of the ring main body 30 facing the third outer shell 4. Furthermore, in the ring main body 30, a connector attachment hole 32 to which the large-diameter portion 22 and the small-diameter portion 23 of the embedded portion 20 of the connector 13 are fitted, an annular seal fitting groove 33 to which the sealing member 9 is fitted at the side portion on the side of the semisphere-side ring-shaped member 7, and a fitting projection 34 projecting from the inner circumferential portion toward the semisphere-side ring-shaped member 7 are formed. This fitting projection 34 is fitted to a fitting recess 35 formed on the inner circumferential portion of the semisphere-side ring-shaped member 7, and increases the effective contact area between the semisphere-side ring-shaped member 7 and the cylinder-side ring-shaped member 8, thereby improving the sealing performance between the semisphere-side ring-shaped member 7 and the cylinder-side ring-shaped member 8.

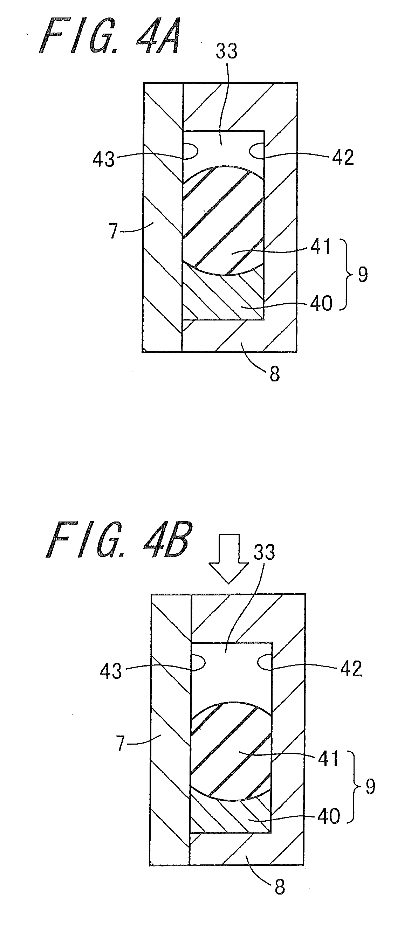

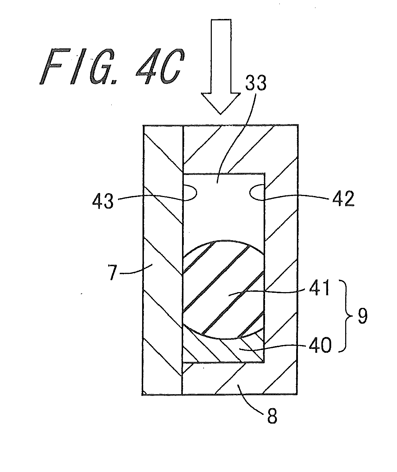

Figs. 4A to 4C are enlarged cross-sectional views for illustrating the function of the sealing member 9, where Fig. 4A shows a state in which external pressure does not act on the sealing member 9, Fig. 4B shows a state in which low external pressure acts on the sealing member 9, and Fig. 4C shows a state in which high external pressure acts on the sealing member 9. The sealing member 9 is disposed in the seal fitting groove 33 of the cylinder-side ring-shaped member 8, and is configured from a back-up ring 40 disposed on the inner side in the radial direction and a sealing member 41 disposed closer to the outside in the radial direction than the back-up ring 40. The back-up ring 40 is made of tetrafluoroethylene resin, and the sealing member 41 (O-ring) is made of nitrile rubber or ethylene propylene rubber, which have a rigidity lower than that of the back-up ring.

In a state where external pressure does not act as shown in Fig. 4A, the back-up ring 40 and the sealing member 41 keep a relaxed state and are not deformed. However, when external pressure acts, both of the back-up ring 40 and the sealing member 41 are compressed inward in the radial direction and deformed as shown in Fig. 4B. Furthermore, when the external pressure is increased, the back-up ring 40 and the sealing member 41 are significantly deformed inward in the radial direction as shown in Fig. 4C. This sort of deformation occurs in a state where the back-up ring 40 and the sealing member 41 are sandwiched between a bottom face 42 in the seal fitting groove 33 and an abutment face 43 of the semisphere-side ring-shaped member 7 facing the cylinder-side ring-shaped member 8, which opposes the bottom face 42, and, thus, the sealing member 41 is prevented by the back-up ring 40 from being deformed inward in the radial direction, and the contact area with the bottom face 42 and the abutment face 43 increases. When the external pressure is increased, the close contact area increases, and the sealing performance is improved.

Furthermore, the first outer shell 2 and the semisphere-side ring-shaped member 7 may be fixed with an adhesive (not shown). This adhesive can keep water-tightness and reinforce the water-tightness. In a similar manner, the third outer shell 4 and the cylinder-side ring-shaped member 8 may be fixed with an adhesive, and the water-tightness thereof may be reinforced with a water-tight tape. Furthermore, although not shown, the semisphere-side ring-shaped member 7 and the cylinder-side ring-shaped member 8 may be fixed with bolts or bolts and nuts. Accordingly, this portion can be easily separated.

Next, a method for producing the first to the third outer shells 2 to 4 will be described. Examples of ceramics used for the first to the third outer shells 2 to 4 include alumina, zirconia, silicon nitride, and silicon carbide. Hereinafter, a method for producing a pressure container using these materials will be described.

(1) Method for producing the first to the third outer shells 2 to 4 using alumina

An alumina primary starting material having an average particle size of approximately 1 $\mu$m is purchased. Taking this primary starting material as 100% by mass, 1 to 5% by mass of sintering aid made of Ca, Si, and Mg oxides, 1 to 1.5% by mass of binder containing PVA or the like, 100% by mass of solvent, and 0.5% by mass of dispersant are weighed, loaded into a container of an agitator, and mixed and agitated to form a slurry. Then, the slurry is granulated by a spray granulation (spray drying) method to form a secondary starting material. Then, this secondary starting material is molded by an isostatic press molding (rubber pressing) method or a powder press molding method, cut if necessary, and then fired at a firing temperature of 1550 to 1700°C in an air atmosphere in a firing furnace. After firing, final finishing is performed by grinding, and, thus, a first to a third outer shell 2 to 4 made of an alumina-based sintered compact having a purity of 95% or more can be obtained.

(2) Method for producing the first to the third outer shells 2 to 4 using zirconia

A commercially available zirconia primary starting material produced by a coprecipitation method and having an average particle size of 0.1 $\mu$m, to which 3 mol% of $Y_2O_3$ has been added, is purchased. Taking this primary starting material as 100% by mass, 3% by mass of binder, 100% by mass of solvent, and 0.5% by mass of dispersant are weighed, loaded into an agitator, and mixed and agitated to form a slurry. Then, the slurry is granulated by a spray granulation method (spray drying method) to form a secondary starting material. Then, this secondary starting material is molded by an isostatic press molding (rubber pressing) method or a powder press molding method, cut if necessary, and then fired at a firing temperature of 1300 to 1500°C in an air atmosphere in a firing furnace. After firing, final finishing is performed by grinding, and, thus, a first to a third outer shell 2 to 4 made of a zirconia-based sintered compact having a purity of 95% or more can be obtained.

(3) Method for producing the first to the third outer shells 2 to 4 using silicon nitride

A silicon nitride primary starting material powder containing 1% by mass or less of $Y_2O_3$ and $Al_2O_3$, having a purity of 99 to 99.8%, and having an average particle size of 1 $\mu$m is prepared. Taking this primary starting material as 100% by mass, 1% by mass of binder, 0.5% by mass or less of dispersant, and 100% by mass of solvent are added to form a slurry. Then, this slurry is granulated by a spray granulation method (spray drying method) to form a secondary starting material. Then, this secondary starting material is molded by an isostatic press molding (rubber pressing) method or a powder press molding method, cut if necessary, and then fired at a maximum temperature of 1900°C in a nitrogen atmosphere in a firing furnace. After firing, final finishing is performed by grinding, and, thus, a first to a third outer shell 2 to 4 made of a silicon nitride-based sintered compact having a purity of 99% or more can be obtained.

(4) Method for producing the first to the third outer shells 2 to 3 using silicon carbide

A sintering aid containing carbon (C) and boron (B), alumina ($Al_2O_3$) and yttria ($Y_2O_3$), or the like is added to a silicon carbide primary starting material having an average particle size of 0.5 to 10 $\mu$m and having a purity of 99 to 99.8% or more. The particle size of the mixture is regulated using a pulverizer such as a ball mill such that the average particle size is 1 $\mu$m or less. Furthermore, an appropriate amount of binder containing polyethylene glycol, polyethylene oxide, or the like is added to the resultant to form a slurry. Then, the slurry is granulated by a spray granulation method (spray drying method) to form a silicon carbide secondary starting material. Then, this secondary starting material is molded by an isostatic press molding method (rubber pressing) or a powder press molding method, cut if necessary, and then fired at a temperature of 1800 to 2200°C in a non-oxidizing atmosphere in a firing furnace. After firing, final finishing is performed by grinding, and, thus, a first to a third outer shell 2 to 4 made of a silicon carbide-based sintered compact having a purity of 99% or more can be obtained.

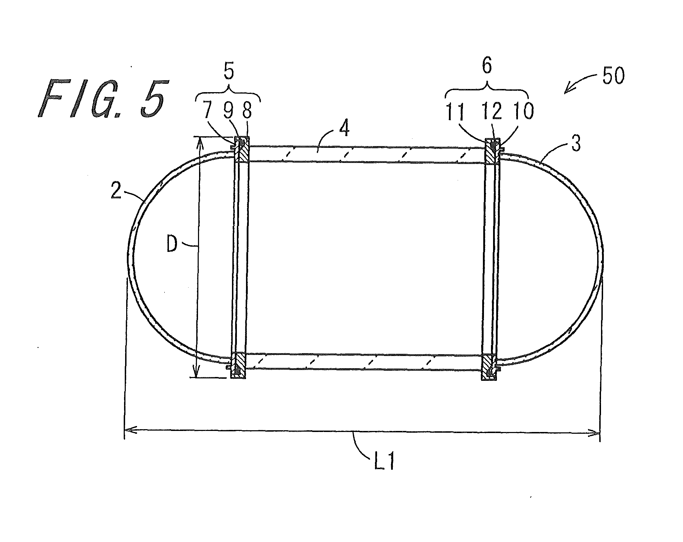

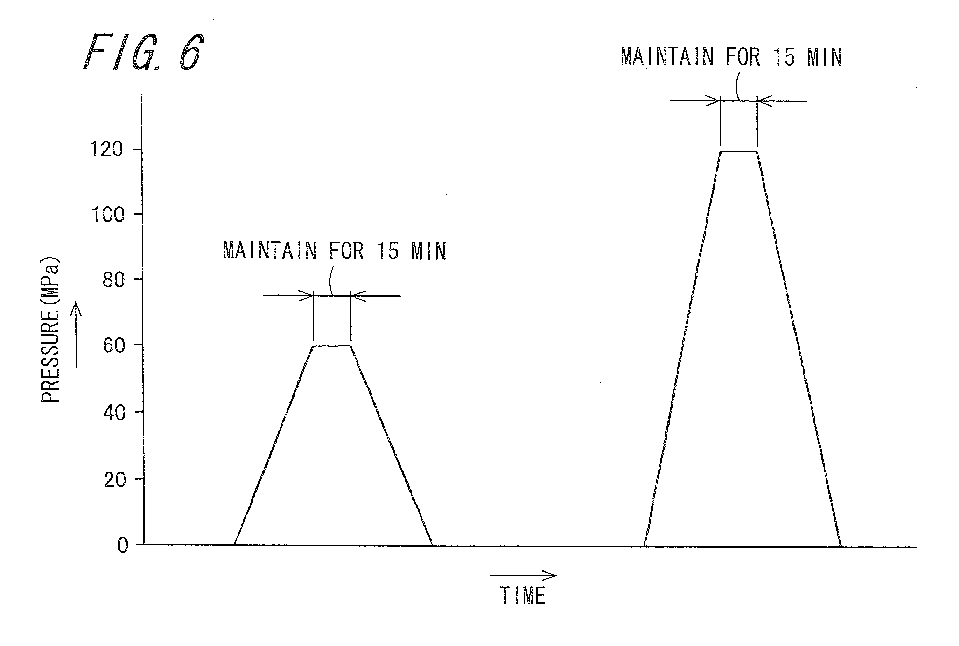

Fig. 5 is a cross-sectional view showing a testing pressure container 50 used in a pressure test for confirming the pressure-resistant performance of the pressure container according to the invention. Fig. 6 is a graph showing a pressing load schedule of the testing pressure container 50. In order to confirm the pressure-resistant performance of the pressure container, the inventors performed a pressure test using the testing pressure container 50. The testing pressure container 50 had a length L1 in the axial direction of 218.2 mm, the first to the third outer shells 2 to 4 were made of a silicon nitride-based sintered compact (manufactured by Kyocera Corporation: SN-240), the semisphere-side ring-shaped members 7 and 10 of the first and the second connecting bodies 5 and 6 were made of a zirconia-based sintered compact (manufactured by Kyocera Corporation: Z-201), the cylinder-side ring-shaped members 8 and 11 of the first and the second connecting bodies 5 and 6 were made of stainless steel (SUS630), and the first and the second connecting bodies 5 and 6 had an outer diameter D of 122.2 mm.

This sort of testing pressure container 50 was used to perform a pressure test twice. In the first pressure test, the pressure was increased to 60 MPa at a pressure increasing speed of 1 MPa/min, this pressurized state was maintained for 15 minutes, and, then, the pressure was reduced to 0 MPa at a pressure reducing speed of 1 MPa/min. In this test, significant deformation such as crushing was not seen in the pressure container 50, and leakage of water into the container did not occur.

Next, in the second pressure test, the pressure was increased to 120 MPa at a pressure increasing speed of 2 MPa/min, this pressurized state was maintained for 15 minutes, and, then, the pressure was reduced to 0 MPa at a pressure reducing speed of 2 MPa/min. Also in this test, significant deformation such as crushing was not seen in the pressure container 50, and leakage of water into the container did not occur. Thus, it was confirmed that the pressure container according to the invention had pressure-resistant performance at a high pressure of 120 MPa corresponding to a pressure at a water depth of approximately 12,000 m.

Furthermore, with a computer simulation using a finite element method, the inventors confirmed that, when pressure was applied to the pressure container according to the invention, the deformation amounts of the end portion of the semispherical first outer shell 2 in contact with the semisphere-side ring-shaped member 7 and the end portion of the straight cylindrical third outer shell 4 in contact with the cylinder-side ring-shaped member 8 in the thickness direction of the semisphere-side ring-shaped member 7 could be accurately obtained with respect to the theoretical values. The analytical method used in the finite element method was a stress analysis of a linear isotropic elastic body, in which non-linear elements of material, geometric shape, and boundary condition are not included, and only elastic modulus E and Poisson's ratio are used as material constant data for describing behavior. In a governing equation, when a rigidity matrix is taken as K, a displacement vector is taken as u, and a load vector is taken as f, the load-displacement relationship in a linear static analysis is expressed as below.

$$Ku = f \quad \dots \quad (1)$$

When known boundary conditions are given for displacement and load, Expression (1) can be expressed as below.

$$\begin{bmatrix} K_{11} & K_{12} \\ K_{21} & K_{22} \end{bmatrix} \begin{Bmatrix} u_1 \\ u_2 \end{Bmatrix} = \begin{Bmatrix} f_1 \\ f_2 \end{Bmatrix} \quad \dots \quad (2)$$

Here, $u_1$, $f_1$, $u_2$, and $f_2$ are respectively an unknown displacement vector, a known load vector, a known displacement vector, and an unknown reaction force vector. When the expression is solved for the displacement u, strain can be obtained as below using the strain-nodal displacement relationship in the element.

$$\varepsilon_{el} = \beta u_{el} \quad \dots \quad (3)$$

Next, stress can be obtained using the following formula by a stress-strain function L.

$$\sigma_{el} = L\varepsilon_{el} \quad \dots \quad (4)$$

Here, $\sigma_{el}$ and $\varepsilon_{el}$ are stress and strain in the element, and $u_{el}$ is a displacement vector of a node constituting that element. $\beta$ represents a strain displacement, and L represents a stress-strain relationship.

According to this embodiment, operation and effects as shown in the following examples are obtained.

(Example 1)

Pressure containers were produced in which the first to the third outer shells 2 to 4 were made of metal (a titanium alloy) and ceramics (an ordinarily used alumina-based sintered compact). When comparison was performed regarding the weight and the deformation amount in the case where pressure was applied to the pressure containers loaded in a pressurized water tank, basically, the ceramic pressure container was more resistant to compression stress (water pressure in this example), and less deformed than the metal pressure container.

When a titanium alloy (specific gravity 4.5, elastic modulus approximately 100 GPa) and an alumina-based sintered compact (specific gravity 3.8 to 3.9, elastic modulus 350 GPa) are compared, the alumina-based sintered compact has a smaller specific gravity, a higher compressive strength, and a larger elastic modulus than the titanium alloy, and, thus, the alumina-based sintered compact is deformed less even when compression weight due to water pressure is applied. Accordingly, the thickness and the weight can be reduced.

Furthermore, in the first to the third outer shells 2 to 4 made of an alumina-based sintered compact, the connecting bodies 5 and 6 used between the first outer shell 2 and the third outer shell 4 and between the second outer shell 2 and the third outer shell 4 are preferably made of materials that have an elastic modulus smaller than those of the first to the third outer shells 2 to 4 as in the semisphere-side ring-shaped members 7 and 10 made of a zirconia-based sintered compact and the cylinder-side ring-shaped members 8 and 11 made of stainless steel, and that are different from each other. In the case where the connecting bodies 5 and 6 were made of a plurality of ring-shaped members, and at least one of these members had an elastic modulus smaller than those of the first to the third outer shells 2 to 4, stress generated at each of the circumferential edge portions of the first and the second outer shells 2 and 3 and the third outer shell 4 was dispersed, discontinuity of the stress was alleviated or eliminated, and the pressure-resistant performance and the sealing performance could be improved.

(Example 2)

Pressure containers were produced in which the first to the third outer shells 2 to 4 were made of ceramic materials that were an alumina-based sintered compact (as in Example 1), a zirconia-based sintered compact, a silicon nitride-based sintered compact, and a silicon carbide-based sintered compact. In a pressure test in a pressurized water tank, the pressure was increased to 120 MPa at a pressure increasing speed of 2 MPa/min, this pressurized state was maintained for 15 minutes, and, then, the pressure was reduced to 0 MPa at a pressure reducing speed of 2 MPa/min. As a result, in all pressure containers, leakage of water into the pressure containers did not occur, and good results were obtained. It was confirmed that, in particular, the pressure container made of a silicon nitride-based sintered compact was excellent because the weight thereof can be reduced.

(Example 3)

Pressure containers were produced in which the material and the number (practically, the number up to five was possible) of the ring-shaped members respectively constituting the connecting bodies 5 and 6 of the pressure container 1 in the foregoing embodiment where the first to the third outer shells 2 to 4 were made of a silicon nitride-based sintered compact were changed. In a pressure test as in Examples 1 and 2, leakage of water into the pressure containers did not occur, and it was confirmed that good results for pressure-resistant performance were obtained.

It was confirmed that, regarding the material of the ring-shaped members respectively constituting the connecting bodies 5 and 6, the semisphere-side ring-shaped members 7 and 10 were preferably made of ceramics (an alumina-based sintered compact, a zirconia-based sintered compact) having an elastic modulus smaller than those of the first to the third outer shells 2 to 4, the cylinder-side ring-shaped members 8 and 11 were preferably made of metal or ceramics, and, in particular, ceramics used for the semisphere-side ring-shaped members 7 and 10 was preferably a zirconia-based sintered compact.

(Example 4)

In order to compare the case in which the open porosity of the first to the third outer shells 2 to 4 is more than 3% and the case in which the open porosity is 3% or less, first, a silicon nitride primary starting material powder containing 1% by mass or less of $Y_2O_3$ and $Al_2O_3$ and having a purity of 99 to 99.8% was prepared. Taking this primary starting material as 100 mass%, 1% by mass of binder, 0.5% by mass or less of dispersant, and 100% by mass of solvent were added to form a slurry. Then, this slurry was granulated by a spray granulation method (spray drying method) to form a secondary starting material powder. Then, this secondary starting material was molded by an isostatic press molding (rubber pressing) method or a powder press molding method, cut if necessary, and then fired at a maximum temperature of 1900°C in a nitrogen atmosphere in a firing furnace. After firing, final finishing was performed by grinding, and, thus, a first to a third outer shell 2 to 4 made of a silicon nitride-based sintered compact and having a purity of 99% or more were produced in which the open porosity was 4% as the case where the open porosity was more than 3%, and in which the open porosity was 3% as the case where the open porosity was 3% or less. Then, comparison was performed regarding the pressure-resistant performance of these outer shells.

The range of open porosity can be increased by producing a silicon nitride primary starting material powder such that the ranges of average particle size (open pores increase as the average particle size increases) and firing temperature (open pores increase as the firing temperature is lowered) are increased.

When pressure containers using the first to the third outer shells 2 to 4 made of a silicon nitride-based sintered compact having open porosities of 4% and 3%, obtained by adjusting the average particle size and the firing temperature of the primary starting material powder, were produced, and the pressure-resistant performance was confirmed, leakage of water into the pressure containers did not occur, and it was confirmed that good results for pressure-resistant performance were obtained.

(Example 5)

In this example, in order to prevent surface damage of the first to the third outer shells 2 to 4, the surface of the first to the third outer shells 2 to 4 (the outer shells were similar to those in Example 4) was coated with a resin. The resin used for coating was urethane in this example, but tetrafluoroethylene resin, epoxy resin, polyethylene resin, and the like may be used in other examples of the invention.

Furthermore, the surface of the first to the third outer shells 2 to 4 made of a silicon nitride-based sintered compact having the open porosities set to 4%, 3%, 1%, and 0.1% by adjusting the average particle size and the firing temperature of the primary starting material powder may be coated with the above-described resin. In the case where the open porosity was set to 4%, due to an anchor effect in which a resin flows into open pores on the surface of the silicon nitride-based sintered compact, the adhesiveness of the resin became good, and the shock resistance against a shock from the outside could be improved. Furthermore, in the case where the open porosity was set to 3% or less, a good adhesiveness was obtained without substantially lowering the strength of the first to the third outer shells 2 to 4, and the shock resistance against a shock from the outside could be improved. Thus, it was confirmed that the first to the third outer shells 2 to 4 coated with a resin preferably have an open porosity of 3% or less, and were particularly preferably made of a silicon nitride-based sintered compact from the viewpoint of the weight reduction.

(Example 6)

Furthermore, the surface of the first to the third outer shells 2 to 4 made of ceramics may be processed so as to have arithmetic mean roughnesses (Ra) of 0.3 $\mu$m, 0.5 $\mu$m, 1 $\mu$m, 5 $\mu$m, 10 $\mu$m, and 12 $\mu$m, and the surface of the first to the third outer shells 2 to 4 may be coated with a resin. In pressure containers produced using these outer shells, as the arithmetic mean roughness (Ra) of the surface of the first to the third outer shells 2 to 4 was smaller, the surface of the first to the third outer shells 2 to 4 coated with a resin was smoother, and, thus, friction with water was smaller, and a good driving force in water could be obtained. Furthermore, as the arithmetic mean roughness (Ra) of the surface of the first to the third outer shells 2 to 4 was larger, the resin was firmly attached to the rough surface of the first to the third outer shells 2 to 4, and a good adhesiveness could be obtained due to the anchor effect. Accordingly, it was confirmed that the arithmetic mean roughness (Ra) of the surface of the first to the third outer shells 2 to 4 was preferably 0.5 $\mu$m or more and 10 $\mu$m or less in order to obtain a good driving force in water and a good adhesiveness.

Here, examples of the method for processing the surface of the first to the third outer shells 2 to 4 made of ceramics to the above-described arithmetic mean roughness (Ra) include sandblasting and etching. In particular, when the surface of the compact is sandblasted and then fired, the arithmetic mean roughness (Ra) of the surface of the first to the third outer shells 2 to 4 can be adjusted to a good range.

Furthermore, the arithmetic mean roughness (Ra) of the surface of the first to the third outer shells 2 to 4 can be measured using a contact-type or non-contact-type surface roughness meter as defined in JIS B 0601-2001, for example, with condition setting according to JIS standard (JIS B 0601 3, JIS B 0633 4, JIS B 0031 Appendixes G and F) in which the cut-off value (sampling length) is 0.8 mm and the evaluation length is 4 mm.

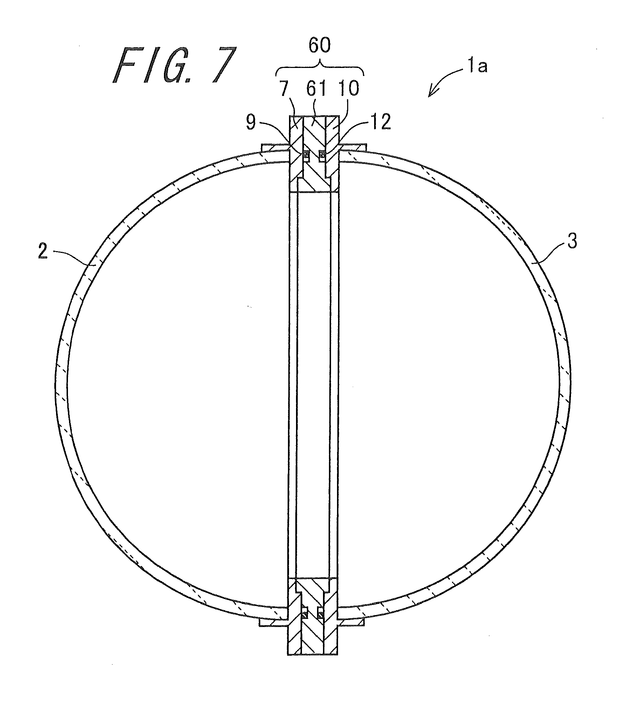

Fig. 7 is a cross-sectional view showing a pressure container 1a of another embodiment of the invention. Here, constituent components corresponding to those in the foregoing embodiment are denoted by the same reference numerals. The pressure container 1a of this embodiment includes the semispherical first outer shells 2 made of ceramics, the semispherical second outer shells 3 made of ceramics, and an annular connecting body 60 interposed between the first outer shell 2 and the second outer shell 3 and made of a material having an elastic modulus smaller than those of the first and the second outer shells 2 and 3.

The connecting body 60 has the semisphere-side ring-shaped member 7 disposed on the side of the first outer shell 2, the semisphere-side ring-shaped member 10 disposed on the side of the second outer shell 3, an annular intermediate ring-shaped member 61 interposed between the semisphere-side ring-shaped members 7 and 10, and the sealing members 9 and 12 interposed between the semisphere-side ring-shaped members 7 and 10 and the annular intermediate ring-shaped member 61. As in the foregoing embodiment, the first and the second outer shells 2 and 3 are made of one selected from alumina, zirconia, silicon nitride, and silicon carbide. Furthermore, it is important that the ring-shaped members 7 and 10 constituting the connecting body 60 are made of a material having an elastic modulus smaller than those of the first and the second outer shells 2 and 3, and can be made of a titanium alloy, stainless steel, or ceramics.

As in the foregoing embodiment, also in the thus configured substantially spherical pressure container 1a, the connecting body 60 interposed between the first and the second outer shells 2 and 3 made of ceramics is made of a material having an elastic modulus smaller than those of the first and the second outer shells 2 and 3, and, thus, at a connecting portion where the circumferential edge portion of the first outer shell 2 and the circumferential edge portion of the second outer shell 3 oppose each other via the connecting body 60, even when stress generated at the circumferential edge portion of the first outer shell 2 is different from stress generated at the circumferential edge portion of the second outer shell 3, use of the connecting body 60 having an elastic modulus smaller than those of the first and the second outer shells 2 and 3 disperses and reduces stress generated at each of the circumferential edge portions of the first and the second outer shells 2 and 3. Accordingly, discontinuity in stress and strain can be alleviated or eliminated, and, thus, the pressure-resistant performance and the sealing performance can be improved.

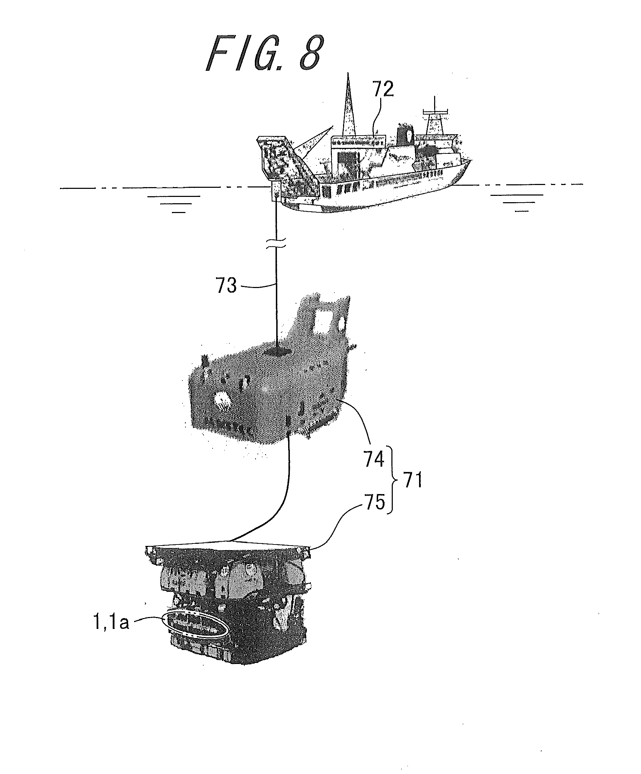

Fig. 8 is a view showing an unmanned exploratory apparatus 71 provided with the pressure container 1 or 1a of the embodiment shown in Fig. 1 or 7. The exploratory apparatus 71 is configured by a propulsive unit 74 that is moored by a primary cable 73 extended from a watercraft 72 on the sea surface, and an exploratory unit 75 that is detachably attached to the propulsive unit 74 and explores the deep sea. The pressure container 1 functions not only as a pressure container that can resist a water pressure in a very deep sea at a water depth of 1000 m to 11,000 m but also as a buoyant body, and is mounted on a side portion of the exploratory unit 75.

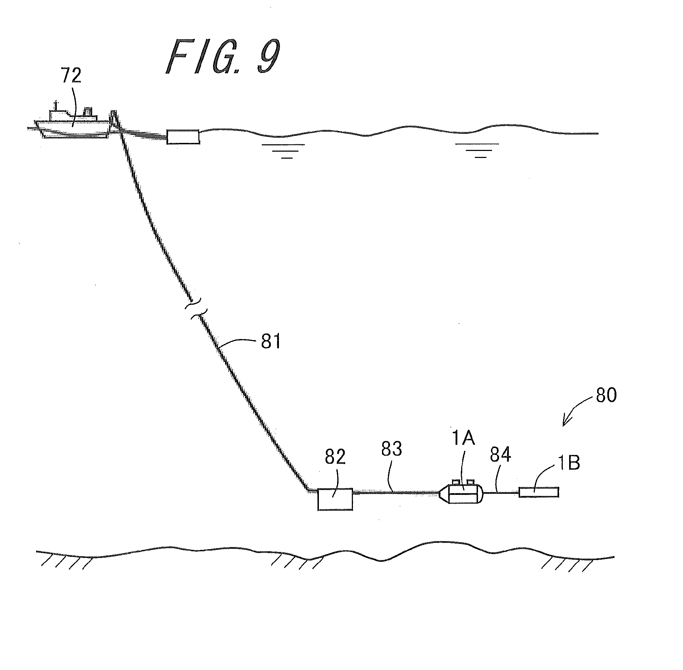

Fig. 9 is a view showing a towed deep-sea exploratory apparatus 80 provided with a pressure container of another embodiment. The towed deep-sea exploratory apparatus 80 is configured by a sinker 82 that is attached to a main wire 81 extended from the watercraft 72 on the sea surface, a pressure container 1A that is connected via a rope 83 to the sinker 82, and a pressure container 1B that is connected via a cable 84 to the pressure container 1A, and can measure a magnetic force of geomagnetism, for example, by accommodating a proton magnetometer in the pressure container 1A, accommodating a magnetometer sensor in the pressure container 1B, and towing the pressure containers at a depth of approximately 500 m above the sea floor.

(Example 7)

Pressure containers 1 were respectively produced in which the first to the third outer shells 2 to 4 were made of a titanium alloy, alumina, and silicon nitride. A plurality of such pressure containers were mounted on the exploratory unit 75 of the unmanned exploratory apparatus 71 shown in Fig. 8, and comparison was performed regarding the weight ratio of the buoyant bodies with respect to the total weight of the exploratory unit 75. As a result, when the pressure containers made of a titanium alloy were used as buoyant bodies, the weight ratio of the buoyant bodies with respect to the total weight was 50% or more. On the other hand, when the pressure containers made of alumina were used as buoyant bodies, the weight ratio of the buoyant bodies with respect to the total weight was 40 to 50%, and the weight ratio of the buoyant bodies could be reduced. Furthermore, when the pressure containers made of silicon nitride were used as buoyant bodies, the weight ratio of the buoyant bodies with respect to the total weight was 30 to 40%, and the weight ratio of the buoyant bodies could be further reduced.

In this manner, in the case where the first to the third outer shells 2 to 4 constituting the pressure container 1 are made of ceramics, the weight ratio of the buoyant bodies can be reduced compared with the case where the outer shells are made of a titanium alloy. Accordingly, the weight of the exploratory apparatus 71 can be reduced, and the load amount of materials collected from the deep-sea floor (e.g., research samples such as deep-sea organisms and minerals) can be increased. Furthermore, since the weight ratio of the buoyant bodies can be reduced, the efficiency of research operations in a deep sea and the fuel efficiency can be improved. Furthermore, since an annular connecting body made of a material having an elastic modulus smaller than those of the first to the third outer shells 2 to 4 is interposed, discontinuity of generated stress can be eliminated, occurring strain can be alleviated, the amounts of the circumferential edge portions opposing each other at the connecting portion contracted by water pressure can be equalized, and generation of bending stress and shearing stress can be suppressed. Accordingly, the thickness of the first to the third outer shells 2 to 4 can be reduced, and, thus, the specific gravity of the entire pressure container can be adjusted to less than 1. Accordingly, it was confirmed that, although the pressure container had a high specific strength (= compressive strength / specific gravity) and a high strength, the pressure container could generate a buoyant force in water, and could function also as a buoyant body.

The invention can be applied to pressure containers of not only unmanned exploratory apparatuses in a deep sea but also sea floor-installed or sea-floating observation apparatuses, and can be preferably used in other marine observation apparatuses as well.

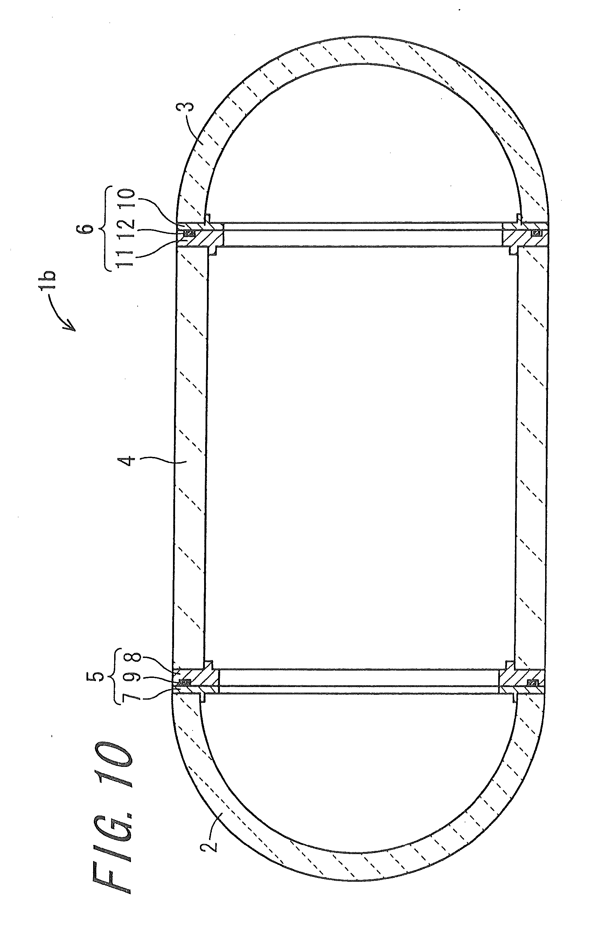

In the foregoing embodiments, the pressure containers 1 and 1a have been described that are configured such that the outer diameter of the connecting bodies 5 and 6 or the outer diameter of the connecting body 60 is larger than the outer diameter of the first to the third outer shells 2 to 4 and the outer diameter of the first and the second outer shells 2 and 3, but, in another embodiment of the invention, a pressure container 1b may be configured such that the outer diameter of the first to the third outer shells 2 to 4 is the same as the outer diameter of the connecting bodies 5 and 6 as shown in Fig. 10. Furthermore, in a similar manner, a substantially spherical pressure container as shown in Fig. 7 may be configured such that the outer diameter of the connecting body 60 and the first and the second outer shells 2 and 3 is the same as the outer diameter of the connecting body 60. Also in this pressure container 1b, as in the pressure containers 1 and 1a in the foregoing embodiments, since an annular connecting body made of a material having an elastic modulus smaller than those of the first to the third outer shells 2 to 4 is interposed at a portion connecting the semispherical first and second outer shells and the straight cylindrical third outer shell and a portion connecting the semispherical first and second outer shells, discontinuity of generated stress can be eliminated, occurring strain can be alleviated, the amounts of the circumferential edge portions opposing each other at the connecting portion contracted by water pressure can be equalized, and generation of bending stress and shearing stress can be suppressed.

The invention may be embodied in other specific forms without departing from the spirit or essential characteristics thereof. The present embodiments are therefore to be considered in all respects as illustrative and not restrictive, the scope of the invention being indicated by the appended claims rather than by the foregoing description and all changes which come within the meaning and the range of equivalency of the claims are therefore intended to be embraced therein.

**Claims**

1. A pressure container, comprising:

   a semispherical first outer shell made of ceramics;
   a semispherical second outer shell made of ceramics; and
   an annular connecting body interposed between the first outer shell and the second outer shell, and made of a material having an elastic modulus smaller than those of the first and the second outer shells.

2. A pressure container, comprising:

   a semispherical first outer shell made of ceramics;
   a semispherical second outer shell made of ceramics;
   a straight cylindrical third outer shell made of ceramics; and
   annular connecting bodies interposed between the first outer shell and the third outer shell and between the second outer shell and the third outer shell, and made of materials at least one of which has an elastic modulus smaller than those of the first to the third outer shells.

3. The pressure container according to claim 2, wherein the connecting bodies are made of materials that have an elastic modulus smaller than those of the first to the third outer shells and that are different from each other.

4. The pressure container according to any one of claims 1 to 3, wherein the connecting body comprises a plurality of ring-shaped members, and at least one of the ring-shaped members has an elastic modulus smaller than those of the outer shells.

5. The pressure container according to claim 4, wherein at least one of the plurality of ring-shaped members is made of a zirconia-based sintered compact.

6. The pressure container according to any one of claims 1 to 5, wherein the outer shells are made of a silicon nitride-based sintered compact.

7. The pressure container according to claim 6, wherein the silicon nitride-based sintered compact has an open porosity of 3% or less.

8. The pressure container according to any one of claims 1 to 7, wherein the surface of the outer shells is coated with a resin.

9. The pressure container according to claim 8, wherein a surface of the outer shells has an arithmetic mean roughness of not less than 0.5 $\mu$m and not greater than 10 $\mu$m.

10. A buoyant body, comprising the pressure container according to any one of claims 1 to 9, wherein the entire pressure container has a specific gravity of less than 1.

11. An exploratory apparatus, comprising the pressure container according to any one of claims 1 to 9.

EP 2 306 050 A1

FIG. 1

1 PRESSURE CONTAINER

5 FIRST CONNECTING BODY

6 SECOND CONNECTING BODY

7 9 8

11 12 10

2 FIRST OUTER SHELL

4 THIRD OUTER SHELL

3 SECOND OUTER SHELL

R1

R4    R3

R5

R2

C

t1

t4    t3

t5

t2

13

L1

# FIG. 2

# FIG. 3

13 CONNECTOR

*FIG. 4A*

*FIG. 4B*

FIG. 4C

FIG. 5

# FIG. 6

EP 2 306 050 A1

*FIG. 7*

# FIG. 8

FIG. 9

FIG. 10

## INTERNATIONAL SEARCH REPORT

| International application No. |
| --- |
| PCT/JP2009/055354 |

A.  CLASSIFICATION OF SUBJECT MATTER
*F16J12/00*(2006.01)i

According to International Patent Classification (IPC) or to both national classification and IPC

B.  FIELDS SEARCHED

Minimum documentation searched (classification system followed by classification symbols)
F16J12/00

Documentation searched other than minimum documentation to the extent that such documents are included in the fields searched
Jitsuyo Shinan Koho         1922-1996   Jitsuyo Shinan Toroku Koho   1996-2009
Kokai Jitsuyo Shinan Koho   1971-2009   Toroku Jitsuyo Shinan Koho   1994-2009

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
| --- | --- | --- |
| Y A | JP 64-026065 A  (Nippon Steel Corp.), 27 January, 1989 (27.01.89), Fig. 2 (Family: none) | 1-3,6-11 4-5 |
| Y A | JP 5-060242 A  (Japan Atomic Energy Research Institute), 09 March, 1993 (09.03.93), Par. Nos. [0015] to [0017] & US 5603788 A          & EP 0529665 A1 | 1-3,6-11 4-5 |
| Y A | JP 6-331032 A  (The Japan Steel Works, Ltd.), 29 November, 1994 (29.11.94), Par. No. [0016] (Family: none) | 1-3,6-11 4-5 |

| ☒ | Further documents are listed in the continuation of Box C. | ☐ | See patent family annex. |
| --- | --- | --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered   to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search 29 May, 2009 (29.05.09) | Date of mailing of the international search report 09 June, 2009 (09.06.09) |
| --- | --- |
| Name and mailing address of the ISA/ Japanese Patent Office | Authorized officer |
| Facsimile No. | Telephone No. |

Form PCT/ISA/210 (second sheet) (April 2007)

23

**INTERNATIONAL SEARCH REPORT**

| International application No. |
| --- |
| PCT/JP2009/055354 |

C (Continuation). DOCUMENTS CONSIDERED TO BE RELEVANT

| Category* | Citation of document, with indication, where appropriate, of the relevant passages | Relevant to claim No. |
| --- | --- | --- |
| Y<br>A | Microfilm of the specification and drawings annexed to the request of Japanese Utility Model Application No. 12893/1990(Laid-open No. 103231/1991)<br>(Toyota Motor Corp.),<br>28 October, 1991 (28.10.91)<br>Fig. 3,<br>(Family: none) | 1-3,6-11<br>4-5 |
| Y<br>A | JP 2007-227063 A (Kyocera Corp.),<br>06 September, 2007 (06.09.07),<br>Par. No. [0012]<br>(Family: none) | 1-3,6-11<br>4-5 |
| Y | JP 2000-272968 A (Sumitomo Electric Industries, Ltd.),<br>03 October, 2000 (03.10.00),<br>Par. No. [0037]<br>(Family: none) | 7-11 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 6426065 A

**Non-patent literature cited in the description**

• Development Trend of Foreign Deep-sea Technologies. *Journal of Japan Deep Sea Technology Association,* 2007